# EUROPEAN PATENT SPECIFICATION

(11) **EP 2 439 924 B1**
(45) Date of publication and mention of the grant of the patent: **14.10.2015**
(21) Application number: 09845415.0
(22) Date of filing: 17.08.2009
(51) Int. Cl.: H04N 21/418, H04N 21/436

(54) **EXTENSION MODULE AND TELEVISION HAVING THE EXTENSION MODULE**
ERWEITERUNGSMODUL UND FERNSEHER MIT DEM ERWEITERUNGSMODUL
MODULE D'EXTENSION ET TELEVISEUR COMPRENANT LE MODULE D'EXTENSION

(30) Priority: 01.06.2009 CN 200910015761
(43) Date of publication of application: 11.04.2012
(73) Proprietor: Haier Group Corporation, Qingdao Shandong 266101 (CN); Qingdao Haier Electronics Co., Ltd., Shandong 266101 (CN)
(72) Inventor: CHEN, Yilong, Qingdao Shandong 266101 (CN); GUO, Jianwei, Qingdao Shandong 266101 (CN); FAN, Lei, Qingdao Shandong 266101 (CN); YU, Zida, Qingdao Shandong 266101 (CN); HU, Xijia, Qingdao Shandong 266101 (CN); CHEN, Liang, Qingdao Shandong 266101 (CN)
(74) Representative: Tischner, Oliver
(86) International application number: PCT/CN2009/073296
(87) International publication number: WO 2010/139135

(56) References cited:
- EP-A2- 1 998 562
- CN-A- 1 953 517
- CN-A- 101 325 677
- CN-Y- 2 859 953
- US-A1- 2004 257 305
- US-A1- 2008 172 504
- US-A1- 2008 271 108

## Description

### Field of the Invention

The present invention relates to a TV set arrangement having a TV set processing unit and an extension module which is connected with a number of signal sources, as defined in independent claim 1.

### Background of the Invention

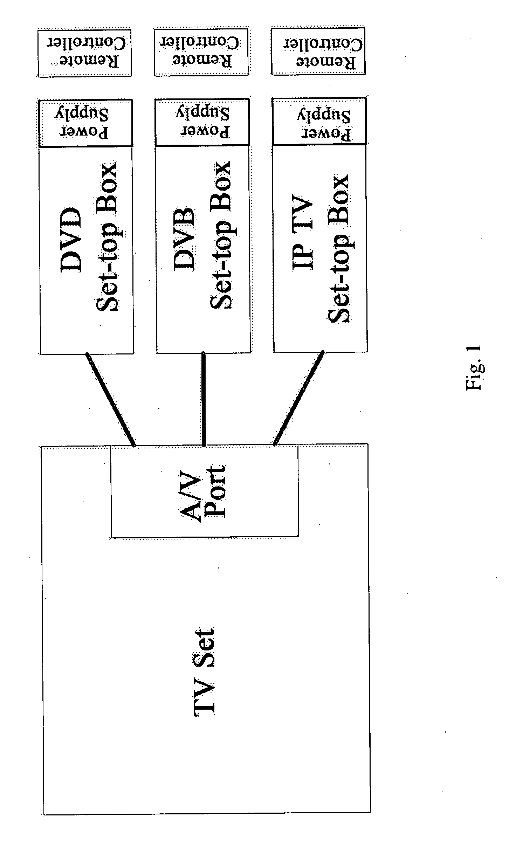

Currently, TV sets are widely used for receiving analog signals, during the generation of digital TV, most of the TV sets, after converting a digital signal to an analog signal through the external device such as a set-top box, a DVD (Digital Video Disc), a DVB (Digital Video Broadcasting, a type of international digital TV open standards), output the analog signal to the TV set to be displayed. For instance, after receiving a digital signal, the set-top box converts it to an interface signal such as A/V (Audio/Video, standard video signal) interface signal or Y, U, V analog component video, etc, and outputs the converted analog signal with low display resolution to the TV set. As show in Fig. 1, the TV set connects to a DVD set-top box, a DVB set-top box and an IP TV set-top box, respectively, through A/V ports. In this structure, however, each set-top box needs an independent power supply to supply power thereto; moreover, each set-top box needs an independent remote controller to control the same, while the signal output from such set-top boxes to the TV set is still an analog image with a quite low resolution. Due to various external device and redundancy of resources, for example, each machine needs an individual power supply, each apparatus needs an independent remote controller, and different product has different number of output terminals in different colors, it causes that the connection of external wires is complex, making the installation and usage inconvenient to the users. In addition, joints of the wires have to be connected iteratively as different devices are used. Further, it is inconvenient to store and operate the plurality of remote controllers. Moreover, outputs of the devices are not standard, and interfaces and performances of similar products are quite different.

On the other hand, some expensive digital TV sets have a display mode of a high resolution (1080P, 1080i, 720P), and are connected with the external devices through various types of interfaces, e.g. VGA (Video Graphics Array, a video transmission interface), DVI (Digital Visual Interface, digital video interface), HDMI (High Definition Multimedia Interface). Due to various interfaces provided in the TV set, the output modes of the external devices, such as set-top box, are also diversified. Further, the output signal of the set-top box usually cannot assure that images of the high-end TV set have a perfect quality.

In the prior art, combined TV sets integrate DVD, DVB and IP TV set-top boxes. For example, Chinese Patent No.200420109717.1 discloses an all-in-one machine for TV and DVD, into which a function for playing DVD is integrated, so that the TV set can not only receive TV programs, but also play DVD. For another example, Chinese Patent No.200520115859.3 discloses a recordable integrated IP TV with an IP set-top box built in the liquid crystal television. In the combined TV sets, however, the DVD, DVB and IP TV set-top boxes are connected with a core circuit of the TV set through different interface circuits. Various types of interfaces neither have a unified standard nor have functions for extending and upgrading, and it is very hard to increase receiving sources of new digital programs. Moreover, various interface types make it difficult to upgrade the existing system. Further, various types of interfaces cannot be adapted to reception of the encryption TV in different regions, and requirements of different information streams in different regions and different operators may hardly be satisfied. The standardization of the host is sacrificed as a specific function, which may not be necessary to all users, is integrated into the host. This host generally is dedicated for particular customers and particular situations, hence it is not suitable for the public, and cannot be popularized. Due to differences between the combined modules of the combined TV set, the product specifications are varied, industry standardization can hardly be performed. Further, related products are not manufactured in the industry easily. Therefore, the production cost is relatively high and the auxiliary products are non-standard.

With the development of the digital technique, at present, in the devices such as DVD, DVB and IP TV set-top boxes, all the processes such as read-out and decompression of audio and video signals have been completely digitalized with standard specifications. The digital audio and video standard interface HDMI for the digital TV has been globally popularized, thus, there is no longer a need to transmit the analog signal between these devices and the digital TV, while it is a general trend to directly transmit standard audio and video digital signals.

US 2004/257305 A1 discloses a motherboard of a plasma display and a sub-board connected to the motherboard. The sub-board provides various input/output connectors, such as S-video connector, CVBS connector and component signal connector, for receiving/outputting various specifications of video signal while connected to the motherboard.

EP 1 998 562 A2 discloses a digital video apparatus comprising a TV receiver set, an AV amplifier, a DVD-player and a set-top box. Each of the DVD-player and the set-top box is connected with the TV receiver set via the AV amplifier. The signals transferred between the AV amplifier and each of the DVD-player and the set-top box concern the video source, the standby command and the address information.

### Summary of the Invention

It is the object of the present invention to provide an improved TV set arrangement.

The present invention provides a TV set arrangement as defined in independent claim 1.

The TV set includes the extension module connected with the signal sources, wherein the extension module includes the number of external interfaces and the extension interface, the number of external interfaces is electrically connected and communicates with the TV set, and the extension interface is electrically connected with the signal sources and outputs a power supply signal and a control signal to the signal sources.

Further, the extension module is removably connected with the TV set.

The signal switching device is provided for switching the signal sources between the extension module and the signal sources, and the extension module outputs a power supply signal and a control signal to the signal switching device.

The signal switching device is connected with the signal sources and outputs a power supply signal and a control signal to the signal sources.

The signal sources are removably connected with the signal switching device.

Further, the extension module also includes one unit selected from a streaming media processing unit, a video processing unit, an audio processing unit and a graphics processing unit.

Further advantages of the present invention are as follows: the extension module of the present invention has the number of external interfaces, which is electrically connected and communicates with the TV set, and the external interface electrically connected with the signal sources and outputting a power supply signal and a control signal to the signal sources, so that the signal sources and the TV set are capable of performing a good communication through the extension module, thus getting resources saved, control easy, adaptation scope wide and upgrading convenient.

### Brief Description of the Drawings

Fig. 1 is a schematic diagram showing a receiving device of a traditional TV set;
Fig. 2 is a block diagram showing a system principle of TV set signal extension in a preferable embodiment of the present invention;
Fig. 3 is a schematic diagram showing a circuit connecting a TV set with an extension module in a preferable embodiment of the present invention;
Fig. 4 is a block diagram showing an extension module circuit in a preferable embodiment of the present invention;
Fig. 5 is a schematic diagram showing signal transmission between signal sources and the TV set through a signal switching device and an extension module in an preferable embodiment of the present invention; and
Fig. 6 is a flow chart showing a method for controlling a TV set with an extension module in a preferable embodiment of the present invention.

### Detailed Description of Embodiments

Exemplary embodiments of the present invention will be described in detail hereunder with reference to the drawings. In these figures, like reference numbers indicate like elements in different figures.

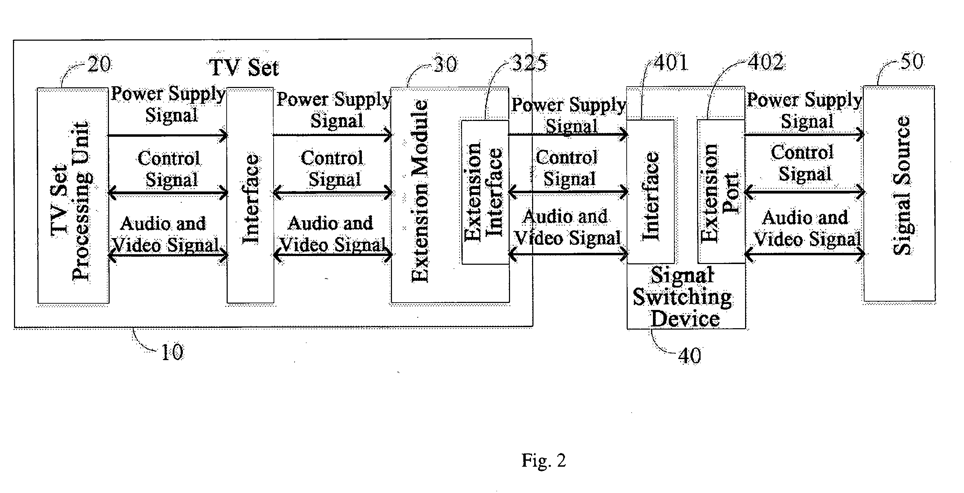

Refer to Fig. 2, it shows a block diagram of a system principle of TV set signal extension in a preferable embodiment of the present invention. Preferably, an extension module 30 in the present invention is electrically connected with a signal source 50 through a signal switching device 40. However, in other embodiments of the present, the signal source 50 may be directly connected with the extension module 30 without the signal switching device 40, and transmits media signals of the signal source 50 through the extension module 30 to a TV set 10 to be played.

The extension module 30 of the present invention may be provided in the TV set 10 and is electrically connected between a TV set processing unit 20 and the signal switching device 40. The extension module 30 is provided with an interface connected with the TV set processing unit 20 and an extension interface 325 connected with the signal switching device 40. The extension interface 325 may be connected and match with an interface 401 on the signal switching device 40 through a signal transmitting line and perform signal transmission between the extension module 30 and the signal switching device 40 through this signal transmitting line, wherein the signal transmitting line may be HDMI, DP (Data Processing) and DVI signal transmitting lines, and signals transmitted through the signal transmitting lines may include control signal, audio and video signal, power supply signal, etc. Of course, the signal transmitting line also may be replaced by a radio network. In addition, an extension port 402 provided on the signal switching device 40 may be connected to a plurality of signal sources 50 and may transmit a power supply signal, a control signal, an audio signal and a video signal through an electrical connection between the extension port 402 and the signal sources 50. These signals may be transmitted to the TV set 10 through the signal switching device 40 and the extension module 30 so that the TV set 10 could play what are transmitted from various different signal sources 50 and functions is extended due to various different signal sources 50.

It is worth of mentioning that the extension module 30 also has the same function as the signal source 50, and may be used individually to extend functions of the TV set 10.

Preferably, the extension module 30 and the signal source 50 may be in a form of Extension card. The extension card may be an exposed circuit board provided with a user operating interface, i.e. a pluggable external signal interface, on one side and a socket terminal on the other side. This socket terminal corresponds to socket ports disposed on an interface of a TV set processing unit 20 and the extension port 402 of the signal switching device 40, so that the socket port could be plugged in the socket terminal on the extension module 30 and the signal source 50 thereby plugging the extension module 30 and the signal source 50 in or remove the same from the TV set processing unit 20 and the signal switching device 40. In another embodiment of the present invention, the positions between the socket terminal and the socket notch may be exchanged, i.e. the socket notch is provided on the extension module 30 and the signal source 50, while the socket terminal is provided in the TV set processing unit 20 and the signal switching device 40 and electrically connected thereto. It is appreciated to the person skilled in the art that there are other forms of the TV set processing unit 20 and the signal switching device 40, such as extension box, on the basis of the teaching of the present invention.

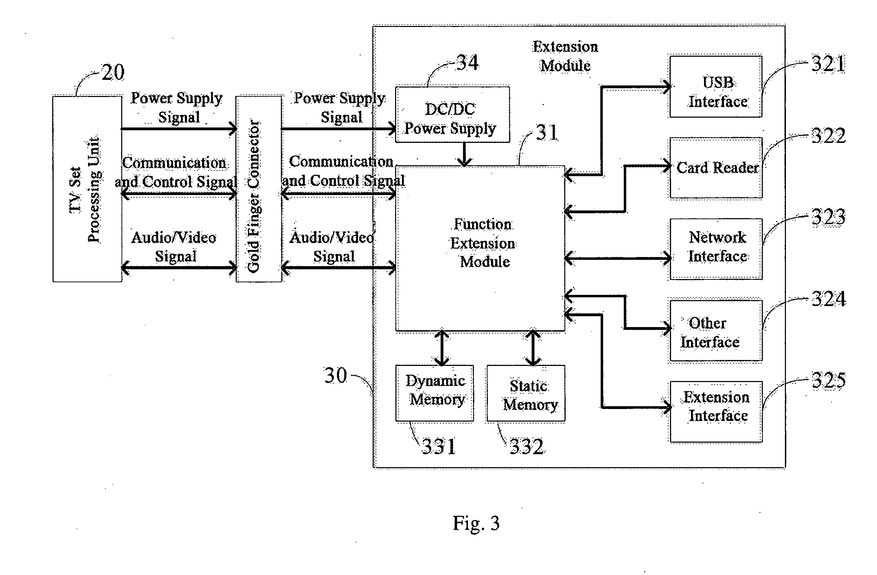

As shown in Fig. 3, as full consideration is given to the diversity of the digital signal sources, optimal display of the digital TV and capabilities for extending the system, the extension module 30 and the signal source 50 provided in the present invention are designed into modules, that is, the socket terminals and socket notches are made by means of the gold finger connector. The convenient connection and flexible extension for the extension module 30 and the signal source 50 are realized through a combination of modularization of the signal source with standardized design of the gold finger connector. With respect to the extension module 30 and the signal source 50 having different functions, the corresponding gold finger connectors have the socket terminals and socket notches of a uniform specification. The specification herein not only means that the socket terminals and the socket notches have the same regulation of arranging electrical signals, but also means that they have a uniform dimension specification in physical sizes.

Signals transmitted by the gold finger connector in the present invention at least include power supply signals, communication and control signals and audio/video signals. The socket terminal is provided on the extension module 30 and may be a gold finger socket member made of a printed circuit board. When the socket terminal is plugged in the socket notch, conductive parts of both come to contact with each other to form an electrical connection, enabling the communication and control signal, audio/video signal and power supply signal to be transmitted to the extension module 30. The conductive part of the socket terminal has a surface that is gold-plated and is characterized by good conductivity, wear resistance and antioxidation. As the signals transmitted by the gold finger connector include the power supply signal, the TV set processing unit 20 may provide a power supply to the extension module 30 through the power supply signal; moreover, a control information connecting mechanism is established between the extension module 30 and the TV set processing unit 20 through the communication and control signal for coordinate and uniform work so as to transmit the audio/video signal between the extension module 30 and the TV set processing unit 20. This configuration enables a plurality of extension module 30 to be supplied with a power with one power supply and controlled with one remote controller, effectively saving energy, facilitating operation and control, and satisfying the user's requirement.

It is worth of mentioning that the gold finger connector is also applied between the signal source 50 and the signal switching device 40, so that a plurality of signal sources 50 are supplied with power and controlled uniformly by the signal switching device 40. Thus, not only can a display standard of a digital TV source be realized, but also different types of digital TV sources such as a digital broadcast source, a digital playing source and a digital network source can be received. In addition, a transition from an analog TV to a digital TV can be accomplished, and functions, such as recordable time retrieving, learning and entertaining, and network download, can be upgraded or added. The consumer just needs to choose function modules of the signal source 50 complying with the standardized interfaces, so that a combination of the signal source 50 having different function modules and the signal switching device 40 is provided with a low and flexible cost, and an individual assembly is also supported. As the "modularized" configuration is flexible, the consumption sectors for the product are enlarged, new techniques and new products may be performed by adding corresponding developed modules into a system.

Particularly, the signal source 50 may extend functions of the TV set 10, and carry out data communication with the extension module 30 and the TV set processing unit 20 through the signal switching device 40. The signal source 50 include module circuits having varied functions and realizing different functions, for instance, recordable time-retrieving module circuit that may play a high definition video and may record a video, learning and entertainment module circuit that may be used for learning English and playing games, digital TV module circuit that may replace the set-top box to play a digital signal, network downloading module circuit that may be used for downloading films from the web, etc. The TV set supporting the extended signal source 50 may realize different functions by changing the signal source 50 having different functions. Of course, the extension module 30, which is similar to the signal source 50, may have a TV set extension module.

The extension module 30 includes a function extension module 31, external interfaces, memories and a direct current-to-direct current (DC/DC) power supply 34 provided on a printed circuit board.

The function extension module 31 which is a core part of the extension module 30 includes a processor and various function units. It receives the communication and control signal and audio/video signal input by the socket terminal or data signal input by an external interface, performs operations such as executing, processing and calculating to the above signals, and returns the processing result or data back to the TV set processing unit 20 or outputs to an external device or external network connected with the external interface.

The external interfaces include Universal Serial Bus interfaces (USB interface 321), a card reader 322, a network interface 323, other interfaces as well as an extension interface 325. The USB 231 interface is configured to be connected with a USB memory or other serial communication devices using the USB interface. The card reader 322 may read a plurality of memory cards of different types. The network interface 323 may be connected with a plurality of types of external networks such as Ethernet, telephone network, cable network, optic fiber network and may have an interface in multiple forms such as RJ-45, RJ-11, parallel port (LPT port), SC port (a king of optic fiber ports) and coaxial port. The other interfaces are of a plurality of types such as IDE (Integrated Device Electronics) interface connected with a hard disk or an optical driver, ATA/SATA (Advanced Technology Attachment/Serial Advanced Technology Attachment, parallel/serial hardware driver) interface, a mouse interface, a keyboard interface, a game handle interface or a microphone interface. The extension interface 325 is configured to be plugged with a signal transmitting line and the signal switching device 40.

As data storing units of the function extension module 31, the memories may store audio and video signal data and communication and control signal data, and include a dynamic memory 331 and a static memory 332. The dynamic memory 331 may be a Dynamic Random Access Memory (DRAM) such as DDR and SDR. The static memory 332 may be a Flash.

The direct current-to-direct current (DC/DC) power supply 34 receives a power supply signal, e.g. a 12V power supply signal, input from the socket terminal, and as a switching power supply, it may perform a boost/buck operation to the input power supply signal to convert it to a fixed voltage needed and outputs the same to the function extension module 31, external interfaces and memories so as to supply an appropriate operating voltage to each part. Particularly, the power supply signal also may be transmitted to the signal switching device 40 through the extension interface 325 among the external interfaces.

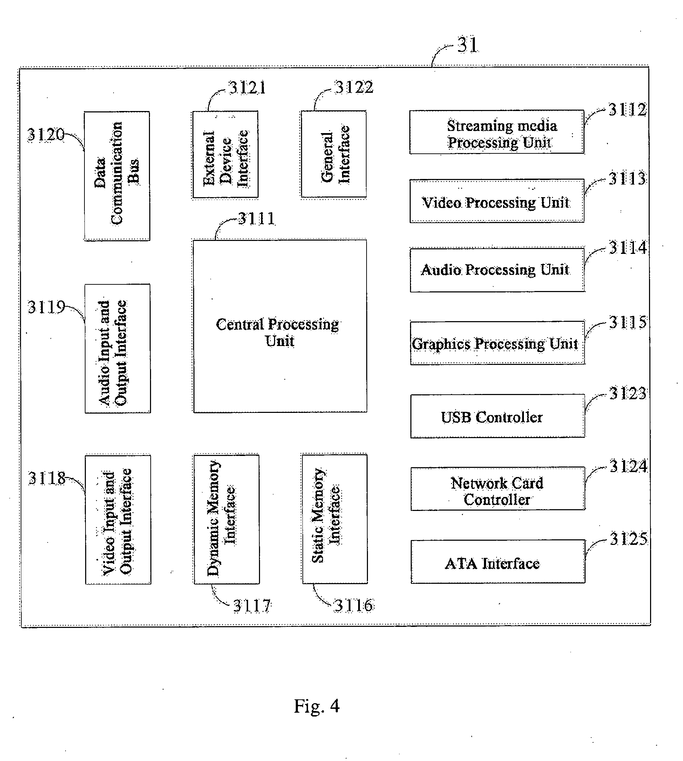

As shown in Fig. 4, the function extension module 31 according to the present invention includes a plurality of function units that may be divided into two types, i.e., processing units and interface units. The processing units include a central processing unit 3111, a streaming media processing unit 3112, a video processing unit 3113, an audio processing unit 3114 and a graphics processing unit 3115. The interface units include a static memory interface 3116, a dynamic memory interface 3117, a video input and output interface 3118, an audio input and output interface 3119, a data communication bus 3120, an external device interface 3121, a general interface 3122, a USB controller 3123, a network card controller 3124 and an ATA interface 3125.

The processing units are responsible for executing the received communication and instruction signal and processing the received audio/video signal. For instance, the streaming media processing unit 3112 is responsible for processing the received streaming media data. The video processing unit 3113 is responsible for processing a video signal. The audio processing unit 3114 is responsible for processing an audio signal. The graphics processing unit 3115 is responsible for producing a graphics program interface such as program menu or producing a user interface such as learning picture, entertaining picture or electronic game picture, etc.. The central processing unit 3111 is responsible for controlling all processing units and interface units, and receiving and executing the input communication and instruction signal.

The interface units are responsible for data communication and transmission internally, externally and between units. For instance, the static memory interface 3116 is responsible for a read-write operation on the static memory. The dynamic memory interface 3117 is responsible for a read-write operation on the dynamic memory. The video input and output interface 3118 is responsible for input and output operations on the video signal. The audio input and output interface 3119 is responsible for input and output operations on the audio signal. The data communication bus 3120 is responsible for the operations on the communication and instruction signal and the data communication between the respective internal units. The external device interface 3121 is responsible for communication and data transmission between the function extension module 31 and the external device. The general interface 3122 supports not only a common interrupting and inquiring low speed data transmission mode but also a DMA high speed data transmission mode, and supports various types of I/O ports, which may satisfy a plurality of application requirements. The USB controller 3123 is responsible for reading an external USB data or performing data writing on an external USB device. The network card controller 3124 is responsible for communication and data transmission with the external network. And the ATA interface 3125 is responsible for performing a read-write operation on devices such as card reader, hard disk and optical driver.

Standardization of the extension module 30 according to the present invention may be adapted to a wider area and more manufacturers. Moreover, the function configuration is free and flexible, and the cost is relatively low when a standard modularized design on each function units or interfaces. The function units or interfaces may be combined as required in product designing, whereby a sufficient space is reserved for additional application of new functions, modules or interfaces in future, and every thing, no matter in aspects of interface specification or software upgrading, etc., is ready for joining future modules with the existing modules. The modules to be newly added in the future can be directly added as being the same interface specification and conforming to the unified protocol specification. In addition, the whole system software may be updated and upgraded in a plurality of manners such as an USB interface or a network interface.

Several application types of the signal sources 50 according to the present invention will be described as follows.
1. Digital integrated signal source: a function signal source of the digital integrated signal source includes a set-top box chip for receiving digital interactive TV program signal. External interfaces of the digital integrated extension card include an RF interface, a network interface and an HDMI interface of cable TV interfaces. The cable digital high definition signal may be received using the digital integrated signal source without connecting to a set-top box.
2. High definition recordable signal source: a function signal source of the high definition recordable signal source includes a video processing unit, an audio processing unit, a USB controller and an ATA interface for converting a TV program to a video file and store the same into a Flash chip. External interfaces of the high definition recordable signal source include a USB interface and an IDE/ATA/SATA interface, and may be connected to a USB memory or a mobile hard disk so as to store the video file. The high definition recordable signal source may further include a timer, and the user may record the TV program optionally in a video recording mode of instant recording or timing recording. In addition, the user may also download a high definition video file such as MPEG or a TS (Transport Stream) stream from the web and play the same using the high definition recordable signal source.
3. Learning and entertaining signal source: a function signal source of the learning and entertaining signal source includes a central processing unit and a graphics processing unit, the static memory stores programs such as poem recitation with pictures, English learning materials and electronic games, and an external interface includes a game console interface. The central processing unit and the graphics processing unit may execute the programs stored in the static memory according to the option of user(s), and plays an executing result, including graphics menu, audio signal and video signal, through the TV set 10.

It should be appreciated that the descriptions on the signal sources above intend to teach the person skilled in the art to fully understand the present invention. And the signal sources according to the present invention may not be limited to the above structures, while various types of new function units and interface units may be added to the signal sources. The person skilled in the art may also carry out a combined design of the function units and interface units of the signal sources as well as other function modules as required.

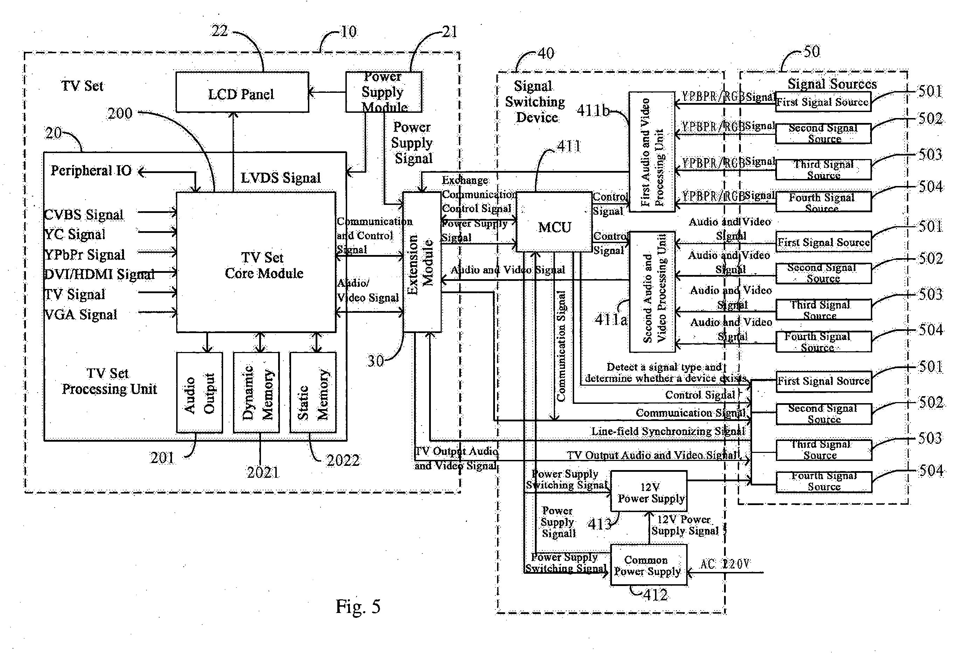

As shown in Fig. 5, a TV set 10 connected to a signal switching device 40 and the extension module 30 according to the present invention includes a TV set processing unit 20, a power supply module 21 and an LCD (Liquid Crystal Display) panel 22, wherein the power supply module 21 is electrically connected to the TV set processing unit 20 and the LCD panel 22 so as to supply the operating voltage. And the power supply module 21 may also be integrated into the TV set processing unit 20.

The TV set processing unit 20, the main board of the TV set 10, is provided in the TV set and includes function modules such as a TV set core module 200, an audio output 201 and memories, etc.. The TV set core module 200 may receive audio/video signals in different formats through various types of external interfaces of the TV set 10. These signals, either analog or digital, may include the received Radio Frequency signal (RF), Composite Video Broadcast Signal (CVBS), luminance/chrominance signal (Y/C), color difference signal (Y/Pb/Pr), VGA (Video Graphics Array) signal, DVI (Digital Visual Interface) signal, HDMI (High Definition Multimedia Interface) signal and various other existing audio/video signals. And after being processed, the audio/video signal is output to a display panel and sound equipment of the TV set.

The TV set core module 200 includes a plurality of function units such as a microprocessor, a graphics processor, a video processing unit, an audio processing unit, a demodulator, a decoder, a data communication bus, and an IO (Input/Output) interface, etc.. The TV set processing unit 20 may receive audio/video signals in different formats through various types of external interfaces of the TV set. These signals, either analog or digital, may include audio/video analog signals or digital signals such as CVBS signal, Y/C signal, Y/Pb/Pr signal, DVI signal, HDMI signal, TV signal and VGA signal, etc.. The TV set processing unit 20 is connected and communicates with external devices through peripheral IO interfaces. The communication thereof may be carried out in a plurality of manners such as General Purpose IO Interface (GPIO), Pulse Width Modulation (PWM), Universal Asynchronous Receiver/Transmitter (UART) and Infrared (IR). The TV set processing unit 20 processes the received signals in different formats, converts a video signal into an LVDS signal (low voltage differential signaling), and outputs the same to the LCD panel 22 to display an image. The audio signal is output to the audio output 201 for sound producing.

The audio output 201 is configured to convert an audio signal in a form of electrical signal to a sound signal in a form of air vibration, and it may be a device such as trumpet and loudspeaker.

As data storing units of the TV set processing unit 20, the memories may store the audio/video signal data, and communication and control signal data, and include a dynamic memory 2021 and a static memory 2022. The dynamic memory 2021, which is a memory allocated according to needs, is generally configured to store a formal parameter of a function, an automatic variable or data, instruction, etc. that are allocated in operation, and it may be a Dynamic Random Access Memory (DRAM) such as DDR and SDR. The static memory 2022, which is a fixedly allocated memory, is generally configured to store a global variable or data, instruction, etc. before compilation, and it may be a Flash.

The signal switching device 40 includes an MCU (Microprocessor Control Unit) 411, a common power supply 412, a 12V power supply 413, a first audio and video processing unit and a second audio and video processing unit. The MCU is electrically connected to the signal switching device 40, the extension module 30 and the TV set processing unit 20 and communicates the control signal with the TV set processing unit 20. Moreover, the TV set processing unit 20 may transmit a power supply signal to the extension module 30 so as to supply power to the MCU 411 of the signal switching device 40, thereby supplying power to the MCU 411. And of course, the MCU 411 may also be supplied power by the common power supply 412 of the signal switching device 40 from which the current and the voltage are converted. The MCU 411 may also transmit control signals to the first video processing unit and the second audio and video processing unit so as to control the first video processing unit and the second audio and video processing unit to transmit a YPbPr/RGB signal and an audio and video signal to the TV set processing unit 20 through interfaces. In addition, the MCU 411 may transmit power supply switching signals to the common power supply 412 and the 12V power supply 413 so as to control the common power supply 412 to generate the 12V power supply 413 and to transmit a 12V power supply signal to the signal source 50 for supplying a power to the signal source 50. And the MCU 411 may transmit detection, control and communication signals to the signal source 50 and detects whether a signal source 50 exists and the type of the existing signal source 50 through the detection signal. The signal source 50 is controlled to operate by the control signal and the signal source required to operate is determined by the communication signal and the TV set processing unit 20.

In the preferred embodiment of the present invention, the signal sources 50 include the first signal source 501, the second signal source 502, the third signal source 503 and the fourth signal source 504. Particularly, the first to fourth signal sources 501, 502, 503 and 504 are supplied with power by a 12V power supply signal of the 12V power supply 413provided on the signal switching device, wherein the 12V power supply 413 may be supplied by the common power supply 412 of common external AC 220V power supply 412 after AC-DC (alternating current-to-direct current) and DC-DC (direct current-to-direct current).

After the first to fourth signal sources 501, 502, 503 and 504 obtain the 12V power supply signal and are electrified, the YPbPr/RGB signal may be input to the first audio and video processing unit 414a, and the YPbPr/RGB signals are input to the TV set processing unit 20 through interfaces by means of the first audio and video processing unit 414a. After the first to fourth signal sources 501, 502, 503 and 504 obtain the 12V power supply signal and are electrified, the audio and video signals may be input to the second audio and video processing unit 414b, and the audio and video signals are input to the TV set processing unit 20 through interfaces by means of the second audio and video processing unit 414b. In addition, the first to fourth signal sources 501, 502, 503 and 504 may further receive a communication signal and a TV output audio and video signal sent from the TV set processing unit 20 through interfaces and may transmit a line-field synchronizing signal to the TV set processing unit 20 through an interface.

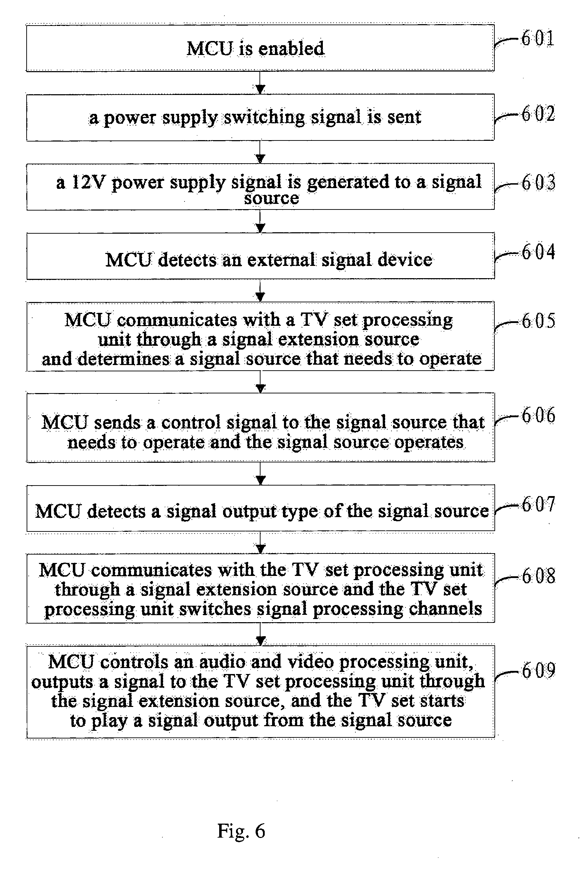

When the TV set 10 is connected with the extension module 30 through the signal switching device 40 so as to extend the TV set processing unit 20, the following will be described in conjunction with Fig. 5, which is shown in Fig. 6:
601, firstly the extension module 30 is inserted into the TV set 10 and is electrically connected with the TV set processing unit 20, then the signal switching device 40 is connected with the extension module 30 wirelessly or through interfaces and a signal transmitting line. Meanwhile, the TV set processing unit 20 may transmit a power supply signal to the MCU 414 in the signal switching device 40 through the extension module 30 or the common power supply 412 so that the MCU 414 is supplied with the power and start to operate.
602, the MCU 414 transmits a power supply switching signal to the 12V power supply 413.
603, the 12V power supply 413 generates a 12V power supply applied to the signal source 50.
604, the MCU 414 may input a detection signal to the signal source 50 so as to determine whether a signal source 50 exists.
605, if it is determined that there is the signal source 50, the MCU 414 interacts a communication control signal with the TV set processing unit 20 through the extension module 30 and determines which signal source 50 needs to operate in the case that there are a plurality of signal sources 50.
606, the MCU 414 sends a control signal to the signal source 50 that needs to operate and enables the signal source 50 to operate.
607, the MCU 414 detects the type of signal output of the signal source 50. In a preferred embodiment of the present invention, an identification signal output from an insertion detection circuit is corresponding to the function type of the signal source 50. This does not only indicate that the signal source 50 has been inserted in the signal switching device 40 and is electrically connected with the MCU, but also inform the MCU of the function type of the signal source 50, such as the digital integrated signal source, high definition recordable signal source or learning and entertaining signal source. For example, the identification signal may represent signal sources 50 of different function types by using a set of binary codes. The signal source 50 communicates the control signal with the TV set processing unit 20 and controls the first audio and video processing unit and the second audio and video processing unit through content of the communication control signal. YPbPr/RGB signals and audio and video signals input by the signal source 50 to the first audio and video processing unit and the second audio and video processing unit are input to the TV set processing unit 20, and, after being processed by the processing units, contents of the signal source 50 are played.

It is worth of mentioning that the signal source 50 outputs an audio/video type signal identification to a TV set processing unit 20, and the audio/video type signal identification may represent, by a set of binary codes, the types of signals output by the external interfaces to the extension card. These signals include radio frequency signal (RF), Composite Video Broadcast Signal (CVBS), luminance/ chrominance signal (Y/C), color difference signal (Y/Pb/Pr), VGA (Video Graphics Array) signal, DVI (Digital Visual Interface) signal, HDMI (High Definition Multimedia Interface) signal and various other existing audio/video signals.
608, the TV set processing unit 20, after receiving the identification signal, switches a corresponding display channel.
609, the MCU 414 controls the audio and video processing units, outputs a signal to the TV set processing unit 20 through a signal extension source. The TV set 10 starts to play the output signal from the signal source 50. The TV set processing unit 20 and the signal source 50 carry out a mutual signal control and communication through the signal switching device 40 and the extension module 30 in a communication manner such as UART /IIC/IR.

Thereafter, the user may use a remote controller to choose whether the TV set 10 receives a program in a common TV receiving mode or a signal source mode. An infrared instruction sent by the remote controller, after being received and decoded by the TV set 10, may be firstly transmitted to the TV set processing unit 20. After the infrared instruction is processed by the TV set processing unit 20, a control instruction is sent. A communication control signal is interacted between the extension module 30 and the signal switching device 40 and transmitted to the signal source 50 through the gold finger connector for performing corresponding operation. Of course, as the signal source 50 has an external device interface that may receive an UART/IIC/IR instruction, the remote controller may also directly carry out a data communication with the signal source 50 so as to control an operation thereof. Therefore, it makes the operation much easier for the user to control the TV set 10, the extension module 30, the signal switching device 40 and a plurality of signal sources 50 with one remote controller.

## Claims

1. A TV set arrangement comprising:
a TV set (10) having a TV set processing unit (20), and an extension module (30) connected with a number of signal sources (50), wherein the extension module (30) comprises a number of external interfaces (321, 322, 323, 324) and an extension interface (325), said external interfaces (321, 322, 323, 324) are electrically connected and communicate with the TV set processing unit (20), and said extension interface (325) is electrically connected with the signal sources (50),
**characterized in that**
a signal switching device (40) is connected between the extension module (30) and the signal sources (50) and is configured for switching the signal sources (50),
wherein the connection between the TV set processing unit (20), the extension module (30), the signal switching device (40) and the signal sources (50) is made by means of gold finger connectors having socket terminals and socket notches, and the signals transmitted by the gold finger connectors at least include power supply signals, communication and control signals and audio/video signals, and
wherein said extension interface (325) outputs a power supply signal for supplying the signal sources (50) with a power and outputs a control signal to the signal sources (50), and the extension module (30) outputs a power supply signal for supplying the switching device (40) with a power and outputs a control signal to the signal switching device (40).

2. The TV set arrangement according to claim 1, **characterized in that** the extension module (30) further comprises one unit selected from a streaming media processing unit (3112), a video processing unit (3113), an audio processing unit (3114) and a graphics processing unit (3115).

## Patentansprüche

1. TV-Set-Anordnung, die umfasst:
ein TV-Set (10) mit einer TV-Set-Verarbeitungseinheit (20) und einem Erweiterungsmodul (30) in Verbindung mit einer Reihe von Signalquellen (50), wobei das Erweiterungsmodul (30) eine Anzahl von externen Schnittstellen (321, 322, 323, 324) und eine Erweiterungsschnittstelle (325) umfasst, wobei die externen Schnittstellen (321, 322, 323, 324) elektrisch verbunden sind und mit der TV-Set-Verarbeitungseinheit (20) kommunizieren, und wobei die Erweiterungsschnittstelle (325) elektrisch mit den Signalquellen (50) verbunden ist,
**dadurch gekennzeichnet, dass**
eine Signalschaltvorrichtung (40) zwischen dem Erweiterungsmodul (30) und den Signalquellen (50) angeordnet und so konfiguriert ist, dass sie die Signalquellen (50) schaltet,
wobei die Verbindung zwischen der TV-Set-Verarbeitungseinheit (20), dem Erweiterungsmodul (30), der Signalschaltvorrichtung (40) und den Signalquellen (50) mithilfe von goldenen Fingerverbindern mit Buchsenklemmen und Buchsenaussparungen hergestellt ist, und wobei die von den goldenen Fingerverbindern übertragenen Signale zumindest Stromversorgungssignale, Kommunikations- und Steuersignale und/oder Audio-/Videosignale beinhalten, und
wobei die Erweiterungsschnittstelle (325) ein Stromversorgungssignal zum Versorgen der Signalquellen (50) mit einem Strom ausgibt und ein Steuersignal an die Signalquellen (50) ausgibt, und wobei das Erweiterungsmodul (30) ein Stromversorgungssignal zum Versorgen der Schaltvorrichtung (40) mit einem Strom ausgibt und ein Steuersignal an die Signalschaltvorrichtung (40) ausgibt.

2. TV-Set-Anordnung nach Anspruch 1, **dadurch gekennzeichnet, dass** das Erweiterungsmodul (30) ferner eine Einheit umfasst, die aus einer Streaming-Medien-Verarbeitungseinheit (3112), einer Videoverarbeitungseinheit (3113), einer Audioverarbeitungseinheit (3114) und einer Graphikverarbeitungseinheit (3115) ausgewählt ist.

## Revendications

1. Agencement de récepteur de télévision comprenant :
un récepteur de télévision (10) comportant une unité de traitement de récepteur de télévision (20), et un module d'extension (30) connecté à un certain nombre de sources de signal (50), dans lequel le module d'extension (30) comprend un certain nombre d'interfaces externes (321, 322, 323, 324) et une interface d'extension (325), lesdites interfaces externes (321, 322, 323, 324) sont connectées électriquement et communiquent avec l'unité de traitement de récepteur de télévision (20), et ladite interface d'extension (325) est connectée électriquement aux sources de signal (50),
**caractérisé en ce que**
un dispositif de commutation de signal (40) est connecté entre le module d'extension (30) et les sources de signal (50) et est configuré pour commuter les sources de signal (50),
dans lequel la connexion entre l'unité de traitement de récepteur de télévision (20), le module d'extension (30), le dispositif de commutation de signal (40) et les sources de signal (50) est réalisée au moyen de connecteurs à fiches dorées comportant des fiches mâles et des fiches femelles, et les signaux transmis par les connecteurs à fiches dorées comprennent au moins des signaux d'alimentation, des signaux de communication et de commande et des signaux audio/vidéo, et
dans lequel ladite interface d'extension (325) délivre un signal d'alimentation pour alimenter les sources de signal (50) et délivre un signal de commande aux sources de signal (50), et le module d'extension (30) délivre un signal d'alimentation pour alimenter le dispositif de commutation (40) et délivre un signal de commande au dispositif de commutation de signal (40).

2. Agencement de récepteur de télévision selon la revendication 1, **caractérisé en ce que** le module d'extension (30) comprend en outre une unité sélectionnée parmi une unité de traitement de diffusion multimédia en temps réel (3112), une unité de traitement vidéo (3113), une unité de traitement audio (3114) et une unité de traitement graphique (3115).
